(19) Europäisches Patentamt

European Patent Office

Office européen des brevets

(11) Publication number: **0 215 680 B1**

# EUROPEAN PATENT SPECIFICATION

(45) Date of publication of patent specification: **03.07.91**   (51) Int. Cl.⁵: **G03B 21/32**

(21) Application number: **86307180.9**

(22) Date of filing: **18.09.86**

(54) Transport and storage system for endless loops of strip material.

(30) Priority: **18.09.85 US 777150**

(43) Date of publication of application:
**25.03.87 Bulletin 87/13**

(45) Publication of the grant of the patent:
**03.07.91 Bulletin 91/27**

(84) Designated Contracting States:
**DE FR GB IT**

(56) References cited:
**DE-A- 2 047 043        DE-A- 2 748 244**
**US-A- 3 780 959        US-A- 3 790 261**
**US-A- 4 010 910        US-A- 4 169 566**
**US-A- 4 208 018        US-A- 4 504 025**

(73) Proprietor: **Crites, Clark Faraday**
**14371 Mulholland Drive**
**Los Angeles California 90077(US)**

(72) Inventor: **Crites, Clark Faraday**
**14371 Mulholland Drive**
**Los Angeles California 90077(US)**

(74) Representative: **Harrison, David Christopher**
**et al**
**MEWBURN ELLIS & CO 2/3 Cursitor Street**
**London EC4A 1BQ(GB)**

## Description

This invention relates generally to a system for storing a quantity of continuous strip material such as tape or film. More particularly, the invention describes a method and apparatus for continuously storing motion picture film on edge on a flat rotating platter, as part of an endless loop projection system.

It has long been recognized in motion picture projection that an endless loop system is desirable, in order to eliminate the need for manual rewinding and rethreading of film in repeated renditions of a program. A number of attempts have been made to provide for storing the film in a coil on a rotating turntable or platter in such a way as to minimize relative longitudinal movement between adjacent film layers in the coil, and yet permit, during each platter revolution, a predetermined length of film to be withdrawn from the center of the coil while the identical length of film is being added to the outside of the coil. The prior systems produce a series of angularly spaced, inwardly directed rounded cusps in the film coil, and are exemplified by the two U.S. patents to Johnson, 4,066,221 and 4,186,891, U.S. patent 4,208,018 to Wilkinson and U.S. patent 4,504,025 to Potts. These patents, in common with other prior systems known to the present inventor, include an application apparatus for incoming film which feeds or applies the incoming film to the rotating platter at a constant linear speed. Separate means are provided in these systems for shaping the film in the coil into a number of spaced inwardly directed cusps. The preamble of Claim 1 corresponds to US-A- 4,504,025

The present invention distinguishes over the prior systems just mentioned by providing a system in which the incoming film is applied to the rotating coil at a cyclically varying speed during each platter revolution, while winding the strip at a constant length per revolution of the platter. More specifically, the system of the present invention may apply incoming film, during a cycle, at a constant maximum speed for a portion of a cycle, then at a diminishing speed down to a minimum speed, then at an increasing speed back to the maximum speed. As will be seen, the portions of the cycle at one speed apply the film to form an arcuate section constituting part of a circle, while the portions of the cycle at another speed of film application create a straight section of film, substantially in the shape of a chord of the circle of which the arcuate portion is of part of the circumference. The straight sections or chords form themselves into cusps as successive film layers are applied in chord shape. In the illustrative form of the invention disclosed herein, the cycle above described is repeated three times during each revolution of the platter. The varying speeds of film application are achieved by a specially shaped platter cam track formed with arcuate sections alternating with chord sections, and the film is applied by an application arm having a cam follower cooperating with the platter cam track.

Formation of the inwardly directed cusps may be facilitated by providing, in the segments including the chord segments, skid means in the form of skid strips of material having a low coefficient of friction, the strips extending generally radially of the platter within the segments mentioned. The strips may be made, for example, of Teflon® or other material presenting an upper surface of substantially lower friction than the platter itself, to encourage inward movement of the film being formed into cusps. The shapes of the arcuate portions of the coiled film may desirably be preserved by flat pads of rubber or equivalent material having a comparatively high coefficient of friction. These pads thus serve as anchors to assist in retaining the arcuate portions of the film coil in position at the junctions between the arcuate sections and the chord sections of the film coil.

Template means may be provided to assist in maintaining the shape of the arcuate portions of the film coil, during initial loading or make-up of the film coil on the platter. Each template means desirably includes a central template block and a pair of laterally spaced smaller wing blocks, the three blocks being joined by a flexible strip having a width similar to that of the film, to form a template set. The template sets may be left in place during complete loading of the turntable, and then removed when make-up is completed and the endless loop is formed.

It is therefore the principal object of the present invention to disclose a novel system for storing film in a coil on a rotating platter. Additional objects are to disclose such a system for use in an endless loop projection system and using a camming relationship to control the speed of film application to the coil; to apply and withdraw equal lengths of film to and from the storage platter during each revolution of the storage platter; to disclose method and apparatus for preliminary shaping of the film coil during initial stages of loading or make-up of the film coil; and for other and additional objects as will be understood from a study of the following illustrative form of the invention, taken in connection with the accompanying drawings.

Fig. 1 is a side elevational view of a conventional film winding machine with the system of the present invention mounted on the uppermost of the three turntables.

Fig. 2 is a top plan view of the major components of an endless loop system embodying the present invention, including the platter and the film application roller assembly and, diagramatically shown, the film path to and from a film projector; on the platter in dotted outline is shown the approximate contour of the innermost layer of the film winding when the platter is substantially fully loaded.

Fig. 3 is a fragmentary plan view on an enlarged scale of the upper portion of the platter as seen in Fig. 2, showing one of the inwardly directed cusps formed in the film winding, the film being shown substantially fully loaded on the platter.

Fig. 4 is a fragmentary view on an enlarged scale of the lower left portion of Fig. 2, showing details of the film application arm and its interengagement with the platter.

Fig. 5 is a fragmentary view on an enlarged scale of the distal portion of the film application arm, showing the path of film immediately before it reaches the application roller, and including an illustrative fail-safe mechanism of the system.

Fig. 6 is a sectional view taken on arrows VI-VI of Fig. 5 showing details of the drive mechanism for the metering sprocket gear.

Fig. 7 is a sectional view on a greatly enlarged scale taken on arrows VII-VII of Fig. 4.

Fig. 8 is a fragmentary view taken on arrows VIII-VIII of Fig. 5 showing details of the fail-safe mechanism in its normal operating condition.

Fig. 9 is a view similar to Fig. 8 except showing the fail-safe mechanism when it has been actuated by a defect or break in the film.

Fig. 10 is a perspective view of a set of template blocks used to assist in shaping successive film layers during the process of loading or make-up in accordance with the present invention.

Fig. 11 is a plan view of the platter of the present system with the first layer of film in place, in condition for the commencement of the loading or make-up process.

Fig. 12 is a plan view similar to Fig. 11 showing the platter as make-up is virtually complete.

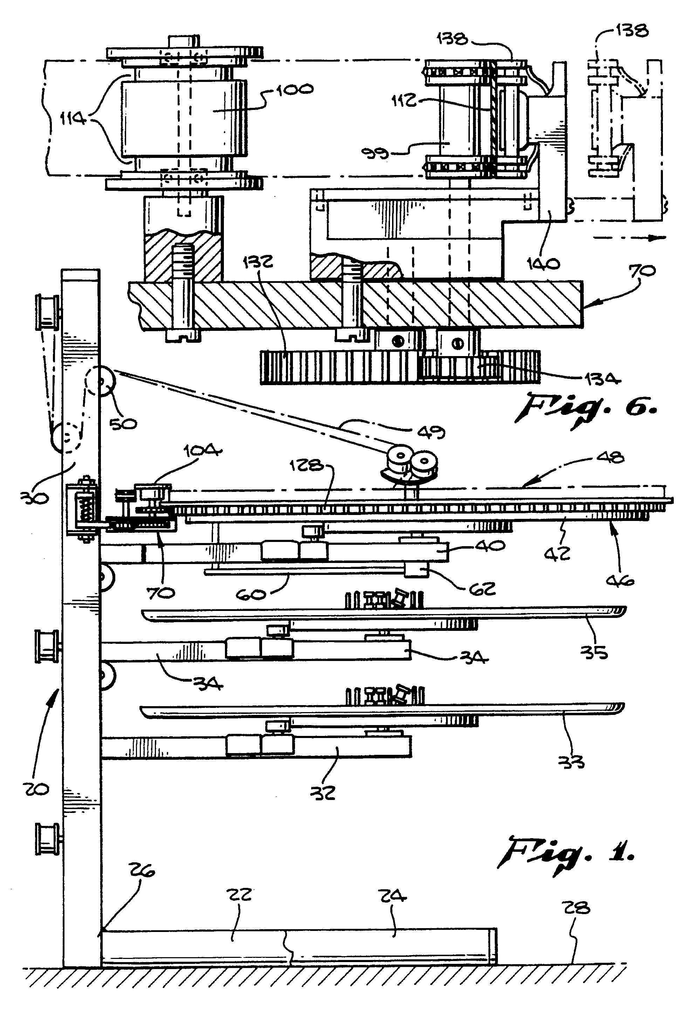

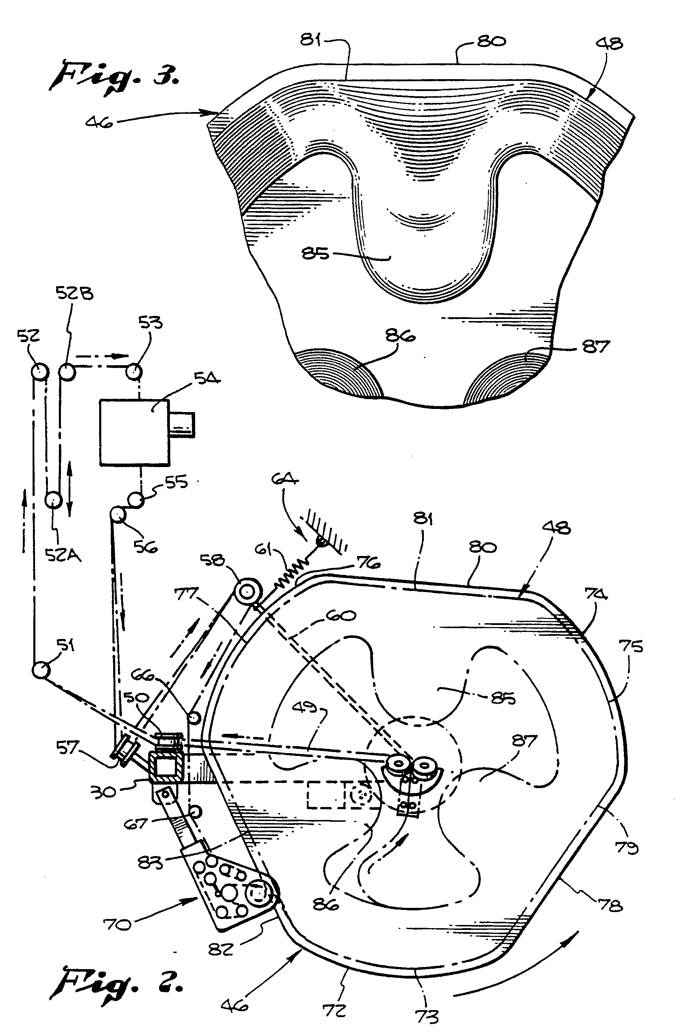

The present invention will be described first with reference to Fig. 1 showing a film winding machine of generally conventional construction, modified to embody a system of the present invention. Thus the machine includes a rigid support structure indicated generally at 20 including a pair of lower support legs 22, 24 forming a V with the vertex 26 at the left, resting on the floor 28. From the vertex 26 an upright post 30 extends upwardly. Support arms 32 and 34 are fixed to post 30 and project horizontally, each supporting a rotatable turntable 33 and 35 respectively on which a film is stored, on edge, in use.

The parts thus far described are conventional and well known in the art. The apparatus of the present invention, to be now described, may be incorporated into existing non-endless loop film handling systems as a retrofit, or may be utilized in a new endless loop film handling system.

A third support arm 40 extends horizontally above the other arms and carries a rotatable turntable 42. The axis of turntable 42 is spaced farther from post 20 than are the axes of turntables 33 and 35, to provide sufficient film storage capacity when the stored film is shaped with inwardly projecting cusps in accordance with the invention. Attached to the upper side of turntable 42 is a platter indicated generally at 46 on which a quantity of film indicated generally at 48 is supported on its edge. The film path during operation includes an upwardly inclined exiting film portion 49 extending from the center of the platter to a guide roller 50 mounted on the post 30. The complete film path will be described in connection with Fig. 2.

Thus in Fig. 2 exiting film portion 49 passes over guide roller 50, and as diagramatically shown, passes over guide rollers 51 and 52, thence downwardly to a vertically adjustable roller 52A and thence upwardly to guide roller 52B. It will be understood that roller 52A may be selectively adjusted vertically in order to minimize or eliminate slack in the endless loop. From roller 52B the film goes via guide roller 53 to a film projector 54. The film return path from the projector passes over guide rollers 55, 56, 57 and 58, the latter roller being carried at the outer end of a speed control arm 60. The latter arm extends radially beneath the upper turntable to a speed control means 62 which controls the speed of rotation of the upper turntable. As diagramatically indicated at 64, the outer end of speed control arm 60 is biased in a clockwise direction by a spring 61 as seen in Fig. 2, in order to maintain a desired tension on the film entering and existing the guide roller 58. The speed control means may be one of those presently in use on endless loop film handling systems.

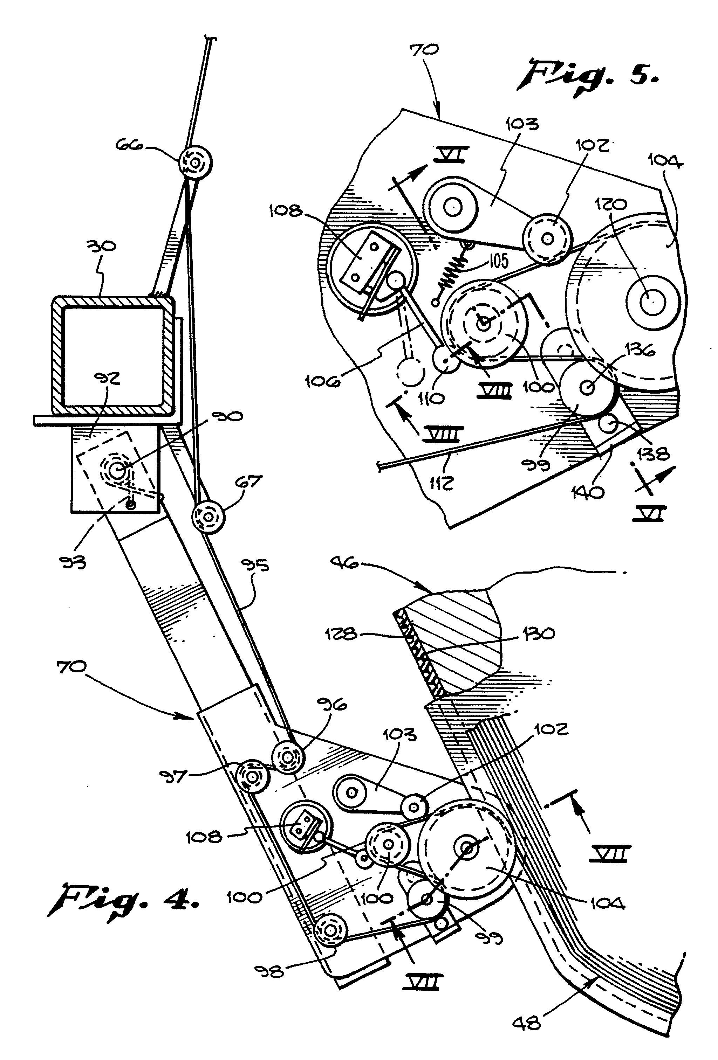

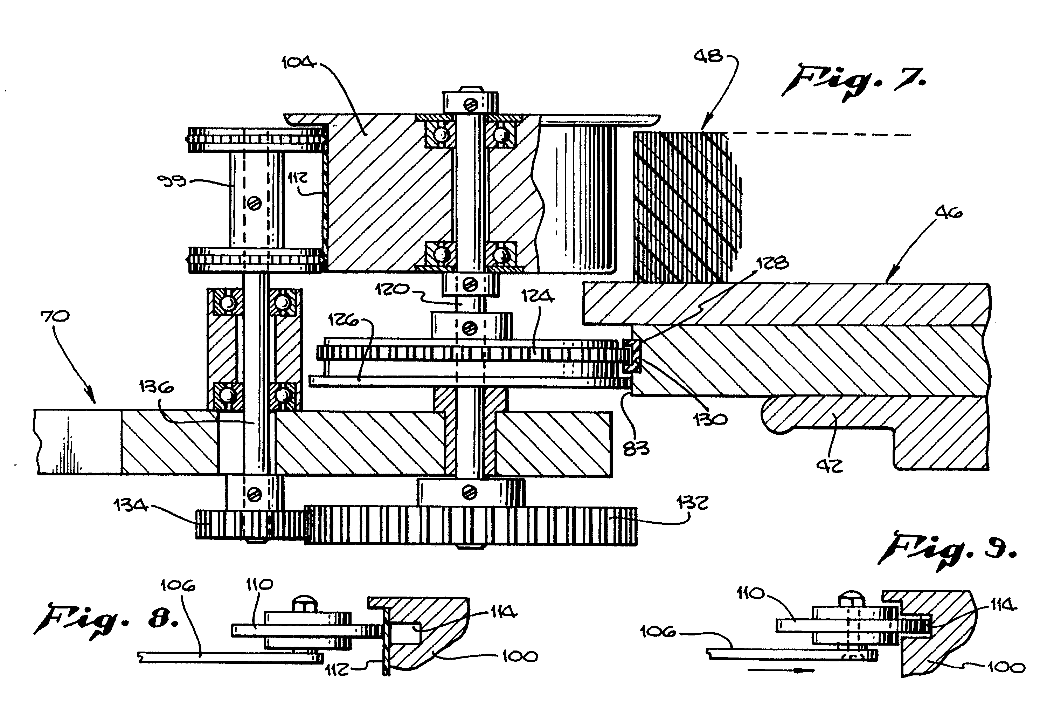

From guide roller 58 the returning film moves via guide rollers 66 and 67 to the film application arm indicated generally at 70; the film path there will be described in detail in connection with Figs. 4 and 5.

With continued reference to Fig. 2, it will be seen that the contour of the periphery 71 of platter 46 includes a plurality of arcuate sections alternating with straight sections, there being three of each of the two types of sections in the preferred form of the invention illustrated. Thus arcuate sections 72, 74 and 76 alternate with straight sections 78, 80 and 82. Recessed inwardly from the periphery of the platter, and seen in dotted outline in Fig. 2 is the contour of a cam track, geometrically similar to the periphery of the platter, and including arcuate sections 73, 75 and 77, alternating with straight sections 79, 81 and 83. As shown, the periphery of the platter projects beyond the periphery of the cam track, forming an annular projection of substantially uniform equal width immediately inwardly of the platter rim. This annular projection prevents the possibility that, during the winding operation, one or more of the outer layers of film might fall off the edge of the platform. As will be later understood, it is the contour of the periphery of the cam track which is important in the operation of the present invention. This aspect is emphasized in Fig. 3, showing a portion of the platter almost fully loaded with film.

The outermost layer of film 48, as it is being wound onto the platter, is vertically aligned with the cam track. The layers applied earlier to the platter will have been incrementally forced inwardly successively as each new outer layer of film is continuously applied in alignment with the cam track. The earlier applied layers of film are thus shaped into a plurality of inwardly directed rounded cusps, one cusp opposite each of the flats or straight sections of the cam track.

Thus cusp 85 is located radially inward of straight section 81 of the cam track, and similar cusps partially seen at 86 and 87 are located radially inward of the other two straight sections of the cam track. For proper shaping of the cusps, each of the straight sections and the arcuate sections of the cam track subtends an angle of about 60° at the center of the turntable.

With reference to Fig. 4, metering and application roller arm 70 is pivotally mounted at 90 to a bracket 92 fixed to vertical post 30. Resilient means such as spring 93 urge arm 70 counterclockwise toward the platter 46. Incoming film 95 moves past guide rollers 66 and 67, then past guide rollers 96, 97 and 98, film sprocket 99, around fail-safe roller 100, and then past a tensioning roller 102 to the film application roller 104, which applies the film to become the outermost layer of the coil of film 48 on the platter 46. The tensioning roller 102 is carried on an arm 103, which in turn is urged clockwise by a spring 105, with the roller functioning to take up slack in the film during the transitions between the arcuate and straight sections.

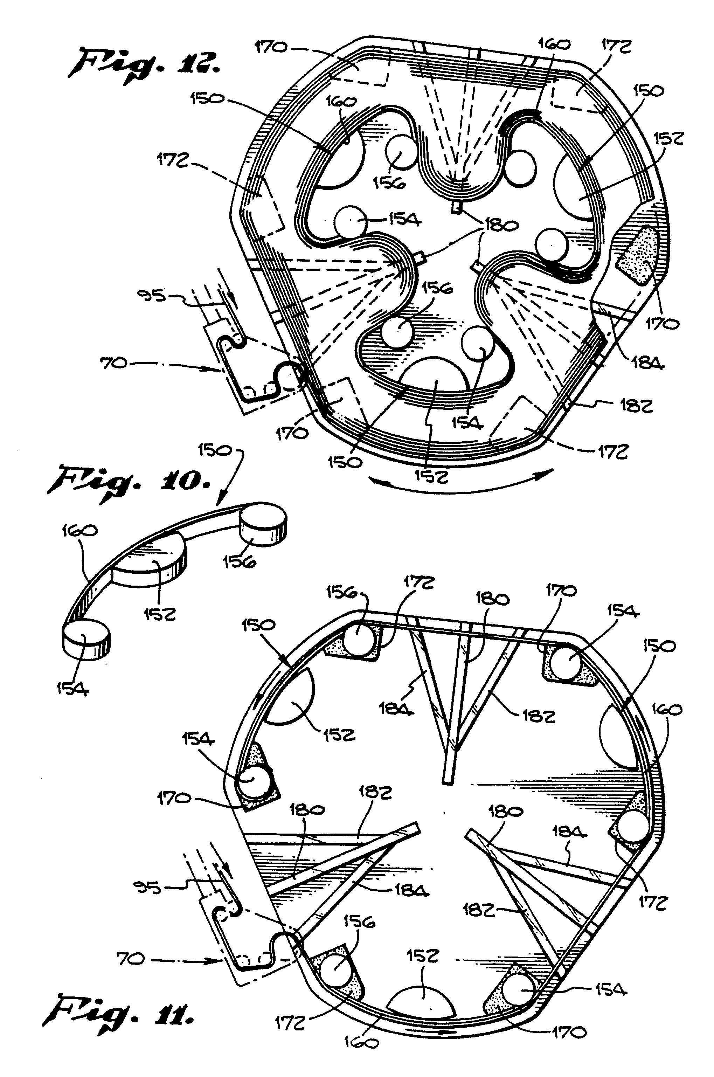

Fail-safe means are provided to sense the continuous running of the film and to detect any break in the film, particularly a longitudinal split. As seen in Figs. 4, 5, 8 and 9, a sensor arm 106 is pivotally mounted at 107 to a microswitch unit 108, and is biased lightly counterclockwise. The distal tip 110 of arm 106 continuously senses the existence of the moving film on roller 100. Operation of the device will be understood by reference to Figs. 8 and 9. In Fig. 8 the sensor tip 110 lightly contacts film 112 during operation. In Fig. 9 the film 112 is no longer present, as would occur in the event of a film break, and the sensor tip is biased into a groove 114 formed in the roller 100. This movement, in known manner, actuates a microswitch in unit 108, thus stopping the projector and other moving parts of the system. A second microswitch may be symmetrically disposed to sense the film near the outer edge of roller 100.

In Fig. 7 are shown details of construction of the film metering and application roller assembly. Near the distal end of pivotal arm 70 is journaled a vertical shaft 120. On its upper portion the film application roller 104 is freely journaled. About midway of its length shaft 120 has fixedly mounted thereon a gear 124 and a cam follower disk 126. The disk is in contact with straight section 83 of the platter cam track. Gear 124 is in mesh with gear belt 128, which is partially recessed in a peripheral groove 130 formed in the platter cam track. The gear belt is continuous around the periphery of the cam track.

The lower end of shaft 120 has fixedly mounted thereon a spur gear 132 whose pitch diameter is equal to the diameter of disk 126, and gear 132 drives a smaller gear 134 fixed on the lower end of a countershaft 136, on the upper end of which is fixedly mounted sprocket 99.

It will thus be seen that during rotation of the platter 46, shaft 120 and countershaft 136, and thus film sprocket 99 are all moved at speeds exactly proportional to and synchronized with the speed of the cam follower disk 126 as it travels along the cam track, thus applying the incoming film to the coil of film at a cyclically varying rate.

In operation, it is preferred to have the roller 104 spaced from the outermost layer of the film 48, as seen in Fig.7, for the major portion of the operating cycle. Normally the roller contacts the film only at the initial portion of each arcuate section turning the transition from the straight section to the arcuate section.

Fig. 6 shows the relationship and functioning of sprocket 99, and fail-safe roller 100, and their associated parts. A film retainer pad or keeper 138 is carried on an arm 140, with the pad serving to urge the film against the sprocket 99. The arm 140 is slidable between the solid line position with the pad engaging the film, and the phantom line position with clearance between the pad and sprocket for insertion or removal of film. In an alternate configuration, the arm may be pivoted rather than sliding.

Figs. 10 and 11 show the use of template means to assist in the original loading or make-up of a filmed program which is to become part of an endless loop in accordance with the invention. Fig. 10 shows the template means proper, indicated generally at 150 and including a central template block 152 and a pair of laterally spaced blocks or wings 154, 156, the three blocks being joined together to form a set by a strip 160 attached to the blocks. The width of the strip and the height of the template blocks is generally similar to the width of the film being stored. The strip is stiff enough to assume and initially retain its original position seen in Fig. 10, with the strip 160 in an arcuate shape, as seen in Fig. 11, substantially congruent with a portion of the outer circumference of the coil of film to be stored.

As appears in Fig. 11, one template set 150 is provided for each of the three arcuate sections of the coil being formed. At the beginning of loading or make-up the leading end of the film may be attached to one of the template blocks.

In order to initially maintain the shape of the arcuate sections, it is desirable to provide on the surface of the platter an anchor pad located beneath the initial position of each of the laterally spaced wing blocks of the template means. The anchor pads are indicated at 170 and 172, and are made of a material such as a rubbery substance having a high coefficient of friction, so that the pads assist the wing blocks to resist breakdown of the ends of the arcuate film sections until a sufficient number of layers of film have been applied to the coil to give the coil stability. As stability is attained the flexibility of the template strip 160 permits it to bend, and thus to allow the template wing blocks 154, 156 to move radially inwardly toward their final positions seen in Fig. 12. With make-up thus completed, the leading end of the film is detached from the template block, all template sets are removed, and the leading end of the film is threaded through the film path previously described, to be spliced to the tail end of the film program to form the endless loop. Rendition of the program can then be repeated as many times as desired without further attention by the operator.

As best seen in Fig. 11, one or more elongated skid strips may be provided on the upper surface of the platter to assist the portions of film forming the cusps to move smoothly toward the center of the platter during operation. Thus, with continued reference to Fig. 11, extending radially upwardly from the center of each of the chord portions or straight section of the platter is a strip 180, by preference made of Teflon® or similar material of low friction. As will be understood, this provides a skid surface for the lower edge of the film as each layer moves inwardly during operation. Additional flanking strips 182 and 184 may be provided to increase the assistance given to the film layers in their inward movement.

## Claims

1. A method for winding and storing a strip of material on edge in the form of a coil (48) on a flat surface of a platter (46) revolving about an axis, the strip being wound at a constant length per revolution of the platter (46), wherein during each revolution of the platter (46) an incoming portion (95) of the strip is continuously applied to the outside of the coil (48) along a path at the periphery (71) of the platter (46), which path has alternating sections of greater radial distance (72, 74, 76) and lesser radial distance (78, 80, 82) from said axis, characterised in that the rate at which said portion (95) of the strip is applied to the coil (48) depends upon the angular displacement of the platter (46) about said axis.

2. A method according to claim 1, wherein along the sections (72, 74, 76) of the path at greater radial distance from the axis said portion (95) of the strip is applied at a substantially constant rate and along the sections (78, 80, 82) of the path at lesser radial distance from the axis said portion (95) of the strip is applied initially at a decreasing rate and subsequently at an increasing rate.

3. A method according to claim 1 or claim 2, wherein the sections (72, 74, 76) of the path at the periphery (71) of the platter (46) which are at greater radial distance from the axis are arcuate and the sections (78, 80, 82) of the path at the periphery (71) of the platter (46) which are at lesser radial distance from the axis are substantially linear.

4. A method according to claim 2 or claim 3, wherein the angle subtended at the axis by each section (72, 74, 76, 78, 80, 82) of the path corresponds to a substantially equal angular displacement of the platter (46).

5. A method according to any one of claims 1 to 4, wherein substantially midway along the sections (78, 80, 82) of the path at lesser radial distance from the axis the rate of application of the portion (95) of the strip has a minimum value, the angular displacement of the platter (46) which corresponds to successive minimum values being approximately one-third of one complete revolution of the platter (46).

6. A method according to any preceding claim, wherein during each revolution of the platter (46) a length (49) of strip is withdrawn from the inside of coil (48), which length (49) is equal to the length of the portion (95) of the strip applied to the outside of the coil (48) during that revolution of the platter (46) and wherein as successive portions of the strip are applied to the outside of the coil (48) by successive revolutions of the platter (46), existing windings of the coil (48) move gradually radially inwardly towards the axis.

7. A method according to any preceding claim wherein the sections (78, 80, 82) of the windings of the coil (48) applied to the coil along the sections of the path at lesser radial distance from the axis form in the coil (48) radially inwardly pointing rounded cusps (85, 86, 87).

8. A method according to claim 7, wherein the formation of the rounded cusps (85, 86, 87) is assisted by skid means (180, 182, 184) having a low coefficient of friction provided on the surface of the platter (46) for contact with the edge of the windings of the coil (48).

9. A method according to claim 7 or 8, wherein radial inward movement of the sections of the windings of the coil (48) between the rounded cusps (85, 86, 87) is resisted by high-friction means (170, 172) provided on the surface of the platter (46).

10. A method according to any preceding claim, wherein driven in synchronism with the platter (46) is a revolving cam having a track (73, 75, 77, 79, 81, 83) which is geometrically similar to the path upon which the portion (95) of the strip is to be applied, the rate of application of the portion (95) of the strip in each respective section (72, 74, 76, 78, 80, 82) of the path during each revolution of the platter (46) being proportional to the linear speed of a radially movable cam follower (126) travelling along respective corresponding portions (73, 75, 77, 79, 81, 83) of the cam track as the cam revolves.

11. A method according to any preceding claim, wherein the strip of material is a motion picture film.

12. An apparatus for winding and storing a strip of material on edge in the form of a coil (48), comprising:
a platter (46) rotatable about an axis and having a flat surface,
drive means for rotating the platter (46) about its axis
a cam adapted for synchronous rotation with the platter (46) about its axis, said cam having a cam track with alternating sections of greater radial distance (73, 75, 77) from said axis and lesser radial distance (79, 81, 83) from said axis, and

means (70) for continuously applying an incoming portion (95) of the strip to the outside of the coil (48) along a path at the periphery (71) of the platter (46) as the platter (46) rotates, said means (70) including a radially moveable cam follower (126) for engaging the cam track (73, 75, 77, 79, 81, 83) and varying the distance from the axis to the point of application of the strip (95),
characterised in that the cam follower (126) includes a first gear (124) and the cam track (73, 75, 77, 79, 81, 83) includes a second gear (128), said first (124) and second (128) gears engaging one another for driving said first gear (124) at a speed proportional to the speed of the cam follower (126) as it travels along the cam track.

13. An apparatus according to claim 12, further comprising:
a sprocket (99) for advancing the strip at a controlled rate, and
means (120, 132, 134, 136) for coupling said first gear (124) with said sprocket (99) for driving said sprocket (99) to increase or decrease the rate at which the incoming portion (95) of the strip is applied to the coil (48) in response to the speed of the cam follower (126) as it travels along the cam track.

14. An apparatus according to claim 12 or claim 13, further comprising at least one template block (150) having a central section (152, 160) and opposite ends (154, 156), the or each template block (150) being adapted for positioning on the platter (46) and said central section(s) (152, 160) being of a resilient material so that the opposite ends (154, 156) of the or each template block (150) may be biassed towards one another by the compressive action of adjacent radially inwardly pointing cusps (85, 86, 87) formed in the coil (48).

15. An apparatus according to any one of claims 12 to 14, wherein the cam track has three or more arcuate sections (73, 75, 77) alternating with three or more substantially linear sections (79, 81, 83).

16. An apparatus according to any one of claims 12 to 15, wherein the periphery of the coil (48) comprises a plurality of angularly spaced arcuate sections, each of which arcuate sections corresponds to one of said sections (73, 75, 77) of the cam track of greater radial distance from said axis, and a plurality of angularly spaced substantially linear sections, each of which substantially linear sections corresponds to one of said sections (79, 81, 83) of the cam track of lesser radial distance from said axis.

17. An apparatus according to claim 16, further comprising a plurality of friction anchor pads (170, 172) provided on the flat surface of the platter (46) at positions distal from said axis, said pads (170, 172) being disposed beneath the peripheral arcuate sections of the coil (48) for contact therewith, the surface of said anchor pads (170, 172) having a higher coefficient friction than that of the flat surface of the platter (46).

18. An apparatus according to claim 16 or claim 17, further comprising a plurality of skid means (180, 182, 184) provided on the flat surface of the platter (46) in the sectors defined by the peripheral substantially linear sections of the coil (48) for contact with the edge of the windings of the coil (48), the surface of said skid means (180, 182, 184) having a lower coefficient of friction than that of the flat surface of the platter (46) in the sectors defined by said peripheral arcuate sections of the coil (48).

19. An apparatus according to any one of claims 12 to 18 further comprising means for withdrawing from the inside of the coil (48) during each revolution of the platter (46) a length (49) of strip material which is equal to the length (95) of strip material applied to the outside of the coil (48) during that revolution of the platter (46).

20. An apparatus according to any one of claims 12 to 19 wherein the strip of material is a motion picture film.

**Revendications**

1. Méthode pour l'enroulement et l'emmagasinage d'une bande d'un matériau de chant sous la forme d'un rouleau (48) sur la surface plane d'un plateau (46) tournant autour d'un axe, la bande étant enroulée à une longueur constante par tour du plateau (46), où pendant chaque tour du plateau (46), une portion (95 ) qui arrive de la bande est continuellement appliquée à l'extérieur du rouleau (48) le long d'un trajet sur le pourtour (71) du plateau (46), lequel trajet a des sections alternées de plus grande distance radiale (72, 74, 76) et de moindre distance radiale (78, 80, 82) par rapport audit axe, caractérisée en ce que le taux auquel ladite portion (95) de la bande est appliquée au rouleau (48) dépend du déplacement angulaire du plateau (46) autour dudit axe.

2. Méthode selon la revendication 1, où le long des sections (72, 74, 76) du trajet à une plus grande distance radiale de l'axe ladite portion (95) de la bande est appliquée à un taux sensiblement constant et le long des sections (78, 80, 82) du trajet à une moindre distance radiale de l'axe, ladite portion (95) de la bande est appliquée initialement à un taux qui diminue et subséquemment à un taux qui augmente.

3. Méthode selon la revendication 1 ou la revendication 2, où les sections (72, 74, 76) du trajet du pourtour (71) du plateau (46) qui sont à une plus grande distance radiale de l'axe sont arquées et les sections (78, 80, 82) du trajet du pourtour (71) du plateau (46) qui sont à une moindre distance radiale de l'axe sont sensiblement linéaires.

4. Méthode selon la revendication 2 ou la revendication 3, où l'angle sous-tendu à l'axe par chaque section (72, 74, 76, 78, 80, 82) du trajet correspond à un déplacement angulaire sensiblement égal du plateau (46).

5. Méthode selon l'une quelconque des revendications 1 à 4, où, sensiblement à mi-chemin le long des sections (78, 80, 82) du trajet à la moindre distance radiale de l'axe, le taux d'application de la portion (95) de la bande a une valeur minimale, le déplacement angulaire du plateau (46) qui correspond à des valeurs minimales successives étant à peu près d'un tiers d'un tour complet du plateau (46).

6. Méthode selon toute revendication précédente où, pendant chaque tour du plateau (46), une longueur (49) de la bande est retirée de l'intérieur du rouleau (48), laquelle longueur (49) est égale à la longueur de la portion (95) de la bande appliquée à l'extérieur du rouleau (48) pendant ce tour du plateau (46) et où, tandis que des portions successives de la bande sont appliquées à l'extérieur du rouleau (48) par les tours successifs du plateau (46), des enroulements existants du rouleau (48) se déplacent graduellement radialement vers l'intérieur, vers l'axe.

7. Méthode selon toute revendication précédente, où les sections (78, 80, 82) des enroulements du rouleau (48) appliquées au rouleau le long des sections du trajet à une moindre distance radiale de l'axe forment, dans le rouleau (48), des sommets arrondis (85, 86, 87) dirigés radialement vers l'intérieur.

8. Méthode selon la revendication 7, où la formation des sommets arrondis (85, 86, 87) est aidée par un moyen formant patin (180, 182, 184), ayant un faible coefficient de frottement, prévu à la surface du plateau (46) pour un contact avec le bord des enroulements du rouleau (48).

9. Méthode selon la revendication 7 ou 8 où, au mouvement radial vers l'intérieur des sections des enroulements du rouleau (48) entre les sommets arrondis (85, 86, 87) résiste un moyen à fort coefficient de frottement (170, 172) qui est prévu à la surface du plateau (46).

10. Méthode selon toute revendication précédente, où une came rotative est entraînée en synchronisme avec le plateau (46), ayant une voie (73, 75, 77, 79, 81, 83) qui est géométriquement similaire au trajet sur lequel doit être appliquée la portion (95) de la bande, le taux d'application de la portion (95) de la bande dans chaque section respective (72, 74, 76, 78, 80 82) du trajet pendant chaque tour du plateau (46) étant proportionnel à la vitesse linéaire d'un galet de came (126) radialement mobile, se déplaçant le long des portions respectives correspondantes (73, 75, 77, 79, 81, 83) de la voie de came tandis que la came tourne.

11. Méthode selon toute revendication précédente, où la bande de matériau est un film de cinéma.

12. Appareil pour enrouler et emmagasiner une bande de matériau de chant sous la forme d'un rouleau (48), comprenent :

un plateau (46) rotatif autour d'un axe et ayant une surface plane ;

un moyen d'entraînement pour faire tourner le plateau (46) autour de son axe ;

une came adaptée à une rotation synchrone avec le plateau (46) autour de son axe, ladite came ayant une voie de came avec des sections alternées de plus grande distance radiale (73, 75, 77) dudit axe et de moindre distance radiale (79, 81, 83) dudit axe, et

un moyen (70) pour appliquer continuellement une portion (95) de la bande qui arrive à l'extérieur du rouleau (48) le long d'un trajet au pourtour (71) du plateau (46) tandis que le plateau (46) tourne, ledit moyen (70) comprenant un galet de came (126) radialement mobile pour engager la voie de came (73, 75, 77, 79, 81, 83) et faire changer la distance de l'axe au point d'application de la bande (95),

caractérisé en ce que le galet de came (126) comporte un premier engrenage (124) et la voie de came (73, 75, 77, 79, 81, 83) comprend un second engrenage (128), lesdits premier (124) et second (128) engrenages venant en engagement l'un avec l'autre pour entraîner ledit premier engrenage (124) à une vitesse proportionnelle à la vitesse du galet de came (126) tandis qu'il se déplace le long de la voie de came.

13. Appareil selon la revendication 12, comprenant de plus :

un pignon (99) pour faire avancer la bande à une allure contrôlée, et

un moyen (120, 132, 134, 136) pour coupler ledit premier engrenage (124) audit pignon (99) afin d'entraîner ledit pignon (99) pour augmenter ou diminuer le taux auquel la portion (95) de la bande qui arrive est appliquée au rouleau (48) en réponse à la vitesse du galet de came (126) lors de son déplacement le long de la voie de came.

14. Appareil selon la revendication 12 ou la revendication 13, comprenant de plus au moins un bloc gabarit (150) ayant une section centrale (152, 160) et des extrémités opposées (154, 156), le ou chaque bloc gabarit (150) étant adapté à un positionnement sur le plateau (46) et ladite ou lesdites sections centrales (152, 160) étant en un matériau élastique de manière que les extrémités opposées (154, 156) du ou de chaque bloc gabarit (150) puissent être sollicitées l'une vers l'autre par l'action de compression des sommets adjacents dirigés radialement vers l'intérieur (85, 86, 87) formés dans le rouleau (48).

15. Appareil selon l'une quelconque des revendications 12 à 14, où la voie de came a trois sections arquées ou plus (73, 75, 77) alternant avec trois sections sensiblement linéaires ou plus (79, 81, 83).

16. Appareil selon l'une quelconque des revendications 12 à 15, où le pourtour du rouleau (48) comprend un certain nombre de sections arquées angulairement espacées, chacune de ces sections arquées correspond à l'une desdites sections (73, 75, 77) de la voie de came de plus grande distance radiale dudit axe, et un certain nombre de sections sensiblement linéaires angulairement espacées, chacune desdites sections sensiblement linéaires correspondant à l'une desdites sections (79, 81, 83) de la voie de came de moindre distance radiale dudit axe.

17. Appareil selon la revendication 16, comprenant de plus un certain nombre de tampons d'ancrage par friction (170, 172) prévus sur la surface plate du plateau (46) en des positions distales dudit axe, lesdits tampons (170, 172) étant disposés en dessous des sections périphériques arquées du rouleau (48) pour un contact avec lui, la surface desdits tampons d'ancrage (170, 172) ayant un plus fort coefficient de frottement que celui de la surface plate du plateau (46).

18. Appareil selon la revendication 16 ou la revendication 17, comprenant de plus un certain nombre de moyens formant patins (180, 182, 184) prévus sur la surface plate du plateau (46) dans les secteurs définis par les sections périphériques sensiblement linéaires du rouleau (48), pour un contact avec le bord des enroulements du rouleau (48), la surface desdits moyens formant patins (180, 182, 184) ayant un coefficient de frottement plus faible que celui de la surface plate du plateau (46) dans les secteurs définis par les sections périphériques arquées du rouleau (48).

19. Appareil selon l'une quelconque des revendications 12 à 18, comprenant de plus un moyen pour retirer, de l'intérieur du rouleau (48), pendant chaque tour du plateau (46), une longueur (49) du matériau en bande qui est égale à la longueur (95) du matériau en bande qui est appliqué à l'extérieur du rouleau (48) pendant ce tour du plateau (46).

20. Appareil selon l'une quelconque des revendications 12 à 19, où la bande de matériau est un film de cinéma.

## Ansprüche

1. Verfahren zum Aufwickeln und Speichern eines hochkant angeordneten Streifens in Form einer Rolle (48) auf einer ebenen Oberseite einer um eine Achse rotierenden Aufnahmeplatte (46), wobei pro Umdrehung der Aufnahmeplatte (46) eine gleichbleibende Länge des Streifens aufgewickelt wird, wobei während jeder Umdrehung der Aufnahmeplatte (46) ein ankommender Bereich (95) des Streifens längs einer Bahn am Umfang (71) der Aufnahmeplatte (46) der Außenseite der Rolle (48) kontinuierlich zugeführt wird, wobei die Bahn abwechselnde Abschnitte mit größerem radialen Abstand (72,74,76) und kleinerem radialen Abstand (78,80,82) von der besagten Achse aufweist, dadurch **gekennzeichnet,** daß die Geschwindigkeit, mit der der besagte Bereich (95) des Streifens der Rolle (48) zugeführt wird, von der Verdrehung der Aufnahmeplatte (46) um die besagte Achse abhängt.

2. Verfahren nach Anspruch 1, wobei der besagte Bereich (95) des Streifens längs der Abschnitte (72,74,76) der Bahn mit größerem radialen Abstand von der Achse mit im wesentlichen gleichbleibender Geschwindigkeit zugeführt wird und wobei der besagte Bereich (95) des Streifens längs der Abschnitte (78,80,82) der Bahn mit kleinerem radialen Abstand von der Achse anfänglich mit einer abnehmenden Geschwindigkeit und nachfolgend mit einer zunehmenden Geschwindigkeit aufgebracht wird.

3. Verfahren nach Anspruch 1 oder 2, wobei die Abschnitte (72,74,76) der Bahn am Umfang (71) der Aufnahmeplatte (46), die einen größeren Abstand von der Achse aufweisen, bogenförmig sind, und wobei die Abschnitte (78,80,82) der Bahn am Umfang (71) der Aufnahmeplatte (46), die einen kleineren radialen Abstand von der Achse aufweisen, im wesentlichen geradlinig sind.

4. Verfahren nach Anspruch 2 oder 3, wobei der von der Achse mit jedem Abschnitt (72,74,76,78,80,82) der Bahn eingeschlossene Winkel im wesentlichen dem gleichen Drehwinkel der Aufnahmeplatte (46) entspricht.

5. Verfahren nach einem der Ansprüche 1 bis 4, wobei im wesentlichen in der Mitte längs der Abschnitte (78,80,82) der Bahn mit kleinerem radialen Abstand von der Achse die Aufbringgeschwindigkeit des Bereichs (95) des Streifens einen Minimalwert hat, wobei der Drehwinkel der Aufnahmeplatte (46), der den aufeinanderfolgenden Minimalwerten entspricht, ungefähr 1/3 einer vollständigen Umdrehung der Aufnahmeplatte (46) entspricht.

6. Verfahren nach einem der vorhergehenden Ansprüche, wobei während jeder Umdrehung der Aufnahmeplatte (46) eine Länge (49) des Streifens vom Inneren der Rolle (48) abgezogen wird, wobei diese Länge (49) der Länge des Bereichs (95) des Streifens gleicht, der während der Umdrehung der Aufnahmeplatte auf die Außenseite (48) der Rolle aufgebracht wird, und wobei während des Aufbringens aufeinanderfolgender Bereiche des Streifens auf die Außenseite der Rolle (48) durch aufeinanderfolgende Umdrehungen der Aufnahmeplatte (46) die vorhandenen Windungen der Rolle (48) zunehmend radial nach innen zur Achse wandern.

7. Verfahren nach einem der vorhergehenden Ansprüche, wobei die Abschnitte (78,80,82) der Windungen der Rolle (48), die längs der Abschnitte der Bahn mit kleinerem radialen Abstand von der Achse auf die Rolle aufgebracht werden, in der Rolle (48) radial nach innen vorspringende abgerundete Kuppen (85,86,87) bilden.

8. Verfahren nach Anspruch 7, wobei die Ausbildung der abgerundeten Kuppen (85,86,87) durch Gleitmittel (180,182,184) mit kleinem Reibungskoeffizient unterstützt wird, die auf der Oberseite der Aufnahmeplatte (46) zur Berührung mit dem Rand der Windungen der Rolle (48) angeordnet sind.

9. Verfahren nach Anspruch 7 oder 8, wobei die radial nach innen gerichtete Bewegung der Abschnitte der Windungen der Rolle (48) zwischen den abgerundeten Kuppen (85,86,87) durch Mittel (170,172) mit hoher Reibung gehemmt wird, die auf der Oberseite der Aufnahmeplatte (46) angeordnet sind.

10. Verfahren nach einem der vorhergehenden Ansprüche, wobei eine rotierende Steuerkurve synchron mit der Aufnahmeplatte (46) angetrieben wird, die eine Kurvenspur (73,75,77,79,81,83) hat, die der Bahn, auf die der Bereich (95) des Streifens aufgebracht werden soll, geometrisch ähnlich ist, wobei die Aufbringgeschwindigkeit des Bereichs (95) des Streifens in jedem betreffenden Abschnitt (72,74,76,78,80,82) der Bahn während jeder Umdrehung der Aufnahmeplatte (46) zu der linearen Geschwindigkeit eines radial beweglichen Kurvennachläufers (126) proportional ist, der an den entsprechenden zugehörigen Bereichen (73,75,77,79,81,83) der Steuerkurve abrollt, wenn sich die Steuerkurve verdreht.

11. Verfahren nach einem der vorhergehenden Ansprüche, wobei der Streifen ein Lichtbildstreifen ist.

12. Vorrichtung zum Aufwickeln und Speichern eines hochkant angeordneten Streifens in Form einer Rolle (48), umfassend:
    eine Aufnahmeplatte (46), die um eine Achse verdrehbar ist und eine ebene Oberseite hat,
    Antriebsmittel zum Verdrehen der Aufnahmeplatte (46) um ihre Achse,
    eine Steuerkurve, die synchron zu der Aufnahmeplatte (46) um ihre Achse verdrehbar ist, wobei die Steuerkurve eine Kurvenspur mit abwechselnden Abschnitten mit größerem radialen Abstand (73,75,77) von der besagten Achse und mit kleinerem radialen Abstand (79,81,83) von der besagten Achse aufweist, und
    Mittel (70), um einen ankommenden Bereich (95) des Streifens der Außenseite der Rolle (48) längs einer Bahn am Umfang (71) der Aufnahmeplatte (46) kontinuierlich zuzuführen, während sich die Aufnahmeplatte (46) verdreht, wobei diese Mittel (70) einen radial beweglichen Kurvennachläufer (126) zum Eingriff mit der Kurvenspur (73,75,77,79,81,83) aufweisen, der den Abstand von der Achse zum Aufbringpunkt des Streifens (95) verändert,
    dadurch **gekennzeichnet**, daß der Kurvennachläufer (126) ein erstes Zahnrad (124) aufweist und daß die Kurvenspur (73,75,77, 79,81,83) ein zweites Zahnrad (128) aufweist, wobei das erste und das zweite Zahnrad (124,128) miteinander in Eingriff stehen, um das erste Zahnrad (124) mit einer zur Geschwindigkeit des Kurvennachläufers (126) proportionalen Geschwindigkeit anzutreiben, während dieser an der Kurvenspur abrollt.

13. Vorrichtung nach Anspruch 12, ferner umfasend:
    ein Ritzel (99) zum Zuführen des Streifens mit einer kontrollierten Geschwindigkeit, und
    Mittel (120,132,134,136) zum Kuppeln des ersten Zahnrades (124) mit dem Ritzel (99) zum Antreiben dieses Ritzels (99), um die Geschwindigkeit, mit der der ankommende Bereich (95) des Streifens der Rolle (48) zugeführt wird, in Abhängigkeit von der Geschwindigkeit des an der Kurvenspur abrollenden Kurvennachläufers (126) zu vergrößern oder zu verkleinern.

14. Vorrichtung nach Anspruch 12 oder 13, ferner umfassend mindestens einen Schablonenblock (150), der einen mittleren Bereich (152,160) und gegenüberliegende Enden (154,156) aufweist, wobei der oder jeder Schablonenblock (150) auf der Aufnahmeplatte (46) anbringbar ist, und wobei der bzw. die mittleren Bereiche (152,160) aus einem elastischen Material bestehen, so daß die gegenüberliegenden Enden (154,156) des oder jedes Schablonenblockes (150) von den in der Rolle (48) gebildeten radial nach innen gerichteten Kuppen (85,86,87) gegeneinander gedrückt werden können.

15. Vorrichtung nach einem der Ansprüche 12 bis 14, wobei die Kurvenspur drei oder mehr bogenförmige Abschnitte (73,75, 77) hat, die sich mit drei oder mehr im wesentlichen geradlinigen Abschnitten (79,81,83) abwechseln.

16. Vorrichtung nach einem der Ansprüche 12 bis 15, wobei der Umfang der Rolle (48) mehrere im Winkelabstand angeordnete bogenförmige Bereiche, die jeweils einem der besagten Abschnitte (73,75,77) der Kurvenspur mit größerem radialen Abstand von der besagten Achse entsprechen, und mehrere im Winkelabstand angeordnete, im wesentlichen geradlinige Bereiche umfaßt, die jeweils einem der besagten Abschnitte (79,81,83) der Kurvenspur mit kleinerem radialen Abstand von der besagten Achse entsprechen.

17. Vorrichtung nach Anspruch 16, ferner umfassend mehrere Reibankerpolster (170,172). die im Abstand von der besagten Achse auf der ebenen Oberseite der Aufnahmeplatte (46) angeordnet sind, wobei diese Polster (170,172) nahe den bogenförmigen Umfangsabschnitten der Rolle (48) zur Berührung mit dieser angeordnet sind, wobei die Oberseite der Ankerpolster (170,172) einen größeren Reibungskoeffizient hat als die ebene Oberseite der Aufnahmeplatte (46).

18. Vorrichtung nach Anspruch 16 oder 17, ferner umfassend mehrere Gleitmittel (180,182,184), die auf der ebenen Oberseite der Aufnahmeplatte (46) in den von den im wesentlichen geradlinigen Umfangsabschnitten der Rolle (48) bestimmten Abschnitten angeordnet sind, zur Berührung mit dem Rand der Windungen der Rolle (48), wobei die Oberfläche dieser Gleitmittel (180,182, 184) einen kleineren Reibungskoeffizient hat als die ebene Oberseite der Aufnahmeplatte (46) in den durch die bogenförmigen Umfangsabschnitte der Rolle (48) begrenzten Sektoren.

19. Vorrichtung nach einem der Ansprüche 12 bis 18, ferner umfassend Mittel, um von der Innenseite der Rolle (48) während jeder Umdrehung der Aufnahmeplatte (46) eine Länge (49) des Streifens abzuziehen, die der Länge (95) des Streifens gleicht, die der Außenseite der Rolle (48) während dieser Umdrehung der Aufnahmeplatte (46) zugeführt wird.

20. Vorrichtung nach einem der Ansprüche 12 bis 19, wobei der Streifen ein Lichtbildstreifen ist.

Fig. 6.

Fig. 1.

EP 0 215 680 B1

Fig. 3.

Fig. 2.

Fig. 5.

Fig. 4.

Fig. 7.

Fig. 8.

Fig. 9.

EP 0 215 680 B1

Fig. 12.

Fig. 10.

Fig. 11.